Europäisches Patentamt

European Patent Office

Office européen des brevets

(11) Veröffentlichungsnummer: **0 328 881**
**A1**

(12) **EUROPÄISCHE PATENTANMELDUNG**

(21) Anmeldenummer: 89100646.2

(22) Anmeldetag: 16.01.89

(51) Int. Cl.⁴: **A23B 4/06 , A23B 4/08**

(30) Priorität: 23.01.88 DE 3801908

(43) Veröffentlichungstag der Anmeldung:
23.08.89 Patentblatt 89/34

(84) Benannte Vertragsstaaten:
AT BE CH DE ES FR GB GR IT LI LU NL SE

(71) Anmelder: F. SCHOTTKE GMBH & CO. KG
Am Lunedeich 116
D-2850 Bremerhaven 29(DE)

(72) Erfinder: Taddiken, Lutz
Theodor-Storm-Strasse 14
D-2854 Loxstedt(DE)
Erfinder: Heise, Bernd
Frühlingstrasse 44
D-2850 Bremerhaven(DE)

(74) Vertreter: von Raffay, Vincenz, Dipl.-Ing. et al
Patentanwälte Raffay & Fleck Postfach 32 32
17
D-2000 Hamburg 13(DE)

(54) **Verfahren zum Herstellen eines reinen Fischproduktes, insbesondere aus Fischfilet.**

(57) Die vorliegende Erfindung betrifft ein Verfahren zum Herstellen eines reinen Fischpoduktes aus Fischfilets und/oder deren Teilen ohne Bindemittel oder dergleichen, dessen Eiweißmyomeren im wesentlichen unbeschädigt sind. Die im Stand der Technik bekannten Fischfrikadellen weisen Zusätze wie Milch, Dickungs- und Geliermittel sowie Würzstoffe auf. Die Erfindung geht jedoch von reinen Fischprodukten aus, die kein Bindemittel oder dergleichen aufweisen sollen und trotzdem eine stabile und ästhetische Form besitzen. Auch sollen sie während der Produktion, der Verpackung und letztendlich beim Verzehr leicht handhabbar sein. Dieses wird erfindungsgemäß durch ein Herstellungsverfahren gelöst, das dadurch gekennzeichnet ist, daß man frische und/oder aufgetaute Fischfilets und/oder -teile in einem Freifallmischer bei einer Temperatur im Bereich von ca. -4°C bis +10°C vereinzelt und ggf. Geschmacksstoffe mit Wasser zumischt, und daß anschließend die Fischfilets und/oder deren Teile auf ca. -4°C (±4°C) zurückgekühlt werden, während sie einen mit Stickstoff beschickten Frosttunnel durchlaufen, und daß die Fischfilets und/oder deren Teile dann über einen Förderer in eine ebenfalls auf eine Temperatur von ca. -4°C (±4°C) abgekühlte Formkammer überführt werden, wo sie mit einem Druck von 5 - 15 kp/cm², insbesondere 10 kp/cm² in eine Formplatte gepreßt werden.

## Verfahren zum Herstellen eines reinen Fischproduktes, insbesondere aus Fischfilet.

Die vorliegende Erfindung betrifft ein Verfahren zum Herstellen eines reinen Fischproduktes aus Fischfilets und/oder deren Teilen nach dem Oberbegriff des Anspruchs 1.

Derartige Verfahren gibt es in den verschiedensten Ausführungsformen. Fischfilets werden heutzutage überwiegend maschinell hergestellt, nach Entfernung der Bauchlappen der Länge nach parallel zur Rückengräte geteilt, enthäutet und soweit wie technisch möglich entgrätet. Um dann daraus die bekannte Fischfrikadelle herzustellen, ist es erforderlich, Bindemittel zuzusetzen, um eine ausreichende Strukturfestigkeit zu erhalten.

Bei dieser Ausgangssituation liegt der Erfindung die Aufgabe zugrunde, ein reines Fischprodukt aus Fischfilets und/oder deren Teilen ohne jegliche Bindemittel und dergleichen herzustellen, dessen Eiweißmyomeren im wesentlichen unbeschädigt sind. Mit anderen Worten: Das reine Fischprodukt soll in seiner Fischgewebestruktur erhalten bleiben.

Diese Aufgabe wird durch das im Anspruch 1 gekennzeichnete Verfahren gelöst. Erfindungsgemäß ist es also von Bedeutung, daß die Fischfilets und/oder deren Teile zunächst bei einer Temperatur von ca. -4°C bis +10°C vereinzelt werden, anschließend dann auf ca. -4°C (±4°C) zurückgekühlt werden, während verhindert wird, daß sie der sauerstoffhaltigen Umgebungsluft ausgesetzt werden, indem man sie einen mit Stickstoff oder beispielsweise $CO_2$ beschickten Frosttunnel durchlaufen läßt. Von besonderer erfindungsgemäßer Bedeutung ist dann die Überführung der Fischfilets und/oder deren Teile in eine Formkammer, die ebenfalls auf eine Temperatur von -4°C (±4°C) abgekühlt ist. Dort werden die Fischfilets dann mit einem Druck von 5 bis 15 kp/cm$^2$, insbesondere 10 kp/cm$^2$, in eine Formplatte gepresst. Die erfindungsgemäße Verfahrensweise stellt sicher, daß die Fischmasse soweit gefestigt ist, daß die "Formlinge" nicht mehr auseinanderfallen können, mit anderen Worten: Die vereinzelten und freifallenden Filets lassen sich ohne jedes Zugeben von Bindemitteln oder sonstigen Zusätzen wieder zu einer einheitlichen, jedoch gutstrukturierten Fischmasse verdichten. Außerdem sind sie problemlos in den konventionell nachgeschalteten Panier- und Backteiganlagen zu umhüllen. Darüberhinaus kann mit dem erfindungsgemäßen Verfahren darauf verzichtet werden, analog zum Warmblütlerfleisch, eine Oberflächenaktivierung (Tumblen) zur Festigung des Produktes durchzuführen. Insbesondere macht sich deutlich vorteilhaft bemerkbar, daß die Filets anfangs ca. eine Temperatur von +1 bis 2°C haben und dann über einen kurzen Zeitraum, ca. 2 bis 4 Minuten, wieder auf -4°C an der Oberfläche herabgekühlt werden, so daß hier zwei verschiedene Strukturen im Filet entstehen. Daraus ergeben sich die Formbarkeit und die Verfestigung des Fischgewebes, was sich nicht ohne weiteres chemisch-physikalisch erklären läßt.

Die Qualität, d.h., die deutlich sichtbaren Filetstücke bleiben in der Formmaschine insbesondere dann sehr gut erhalten, wenn die Formkammer nicht im Rhythmus "einmal füllen plus einmal ausformen", sondern "einmal füllen und drei- bis sechsmal ausformen" arbeitet. Hierdurch wird die Walkarbeit und das Zerstören des Filets deutlich herabgesetzt. Durch die längere Verweilzeit von gefrorenem Fisch in der Formkammer ist eine Abkühlung der Umgebungstemperatur im Metall deutlich verbessert, so daß die gewünschte Temperatur schneller erreicht wird. Dieses ist an dem vorzeitigen Bereifen oder Vereisen der Metalloberfläche deutlich sichtbar.

Vorteilhafterweise wird die Formkammer anfänglich ca. 5 bis 30 Minuten durch das rückgefrostete Produkt gekühlt, um je nach Fischrohware bzw. -sorte und der jeweils innerhalb des erfindungsgemäßen Bereiches gewählten Temperatur die gewünschte Ausformung und Stabilität des reinen Fischproduktes zu erzielen. Insbesondere ist die gewünschte Ausformung und Stabilität dann gegeben, wenn die Metalloberfläche der unter Druck stehenden Formkammer äußerlich beginnt zu bereifen oder bereits vereist ist.

Weitere Merkmale und Vorteile der vorliegenden Erfindung, die sich u.a. auch auf mögliche Zusätze beziehen, bzw. deren bevorzugte Gewichtsanteile angeben, gehen aus den vorstehenden Unteransprüchen hervor. Die obigen Ausführungen machen deutlich, daß das erfindungsgemäße Verfahren nicht aus einem an-, auf-, oder stufenweise aufgetauten Fischblock bei kontinuierlichem Preßdruck Segmente herausgestanzt werden, sondern das vielmehr eine halbplatische Masse entsteht, welche durch den hohen Druck trotz der Minustemperatur plastifiziert und in eine neue Form gebracht wird. Nicht zuletzt wird erfindungsgemäß hierdurch erstmal ein verlustfreies Umformen unabhängig von den erzielten Formen möglich.

Im folgenden wird ein bevorzugtes Ausführungsbeispiel des erfindungsgemäßen Verfahrens näher erläutert. Es dürfte jedoch einleuchten, daß die nachstehende Ausführungsform lediglich beispielhaften Charakter hat und die Erfindung nicht auf gerade die nachfolgend verwendeten Werte beschränkt ist.

Zunächst wird die Fischrohware vorbereitet. Ausgangsbasis ist das Fischfilet, welches gefroren und danach aufgetaut wird. Selbstverständlich kann im Rahmen der Erfindung auch frisches Fischfilet eingesetzt werden. Das Fischfilet wird bei -1°C in einem Freifallmischer vereinzelt bzw. vorsichtig gemischt und mit Salz und Zitronensäure vermengt, wobei ca. 1,5 Gew% Wasser zugesetzt werden, die zur guten Verteilung der Geschmacksstoffe benötigt werden. Sollten keine Geschmacksstoffe zugesetzt werden, ist auch Wasser entbehrlich. Aufgrunddessen bilden die eben erwähnten Stoffe keinen zwingenden Bestandteil des erfindungsgemäßen Verfahrens. Nach dem Mischvorgang wird die mittlerweile voll aufgetaute Fischfilet-Rohware, auf ca. -4°C (±4°C) durch Frostung zurückgekühlt. Hierbei durchläuft sie einen Stickstoff-Frosttunnel innerhalb einer Zeit von ca. 90 Sekunden, so daß lediglich ihre Oberfläche angefroren wird. Andere vorrichtungsgemäße Anlagen und Zeiten sind jedoch ebenfalls denkbar, sofern sie die gleiche Wirkung erzielen.

Anschließend werden die Fischfilets dann über ein Förderband oder Schnecken in eine Formkammer überführt, in der die eigentliche Produktausformung als zweiter Schritt stattfindet. Verständlicherweise wird die Zuführung der lediglich an der Oberfläche angefrorenen Fischfilets so schonend wie möglich durchgeführt, um ein Zerstören der Fischfilets bzw. ihrer Eiweißmyomeren zu verhindern. In der Formkammer werden die Fischfilets mit einem Druck von 10 kp/cm² in eine Formplatte gepresst, wobei es von erfindungsgemäßer Bedeutung ist, daß die Formkammer ebenfalls auf eine Temperatur von ca. -1°C abgekühlt wird. Die Fischfilets verweilen ca. 1-4 Sekunden in dieser gekühlten Formkammer unter Druck, bis ihre Metalloberfläche mit der äußerlichen Bereifung beginnt. In diesem Zustand ist das Fischfilet dann soweit gefestigt, daß die Formlinge nicht mehr auseinanderfallen. Aus ästhetischer Sicht hat sich eine Fischform des ausgeformten Produkts als besonders vorteilhaft gezeigt. Die umhüllten "Fischlis" werden dann in einem Schockfroster gefroren und anschließend verpackt.

## Ansprüche

1. Verfahren zum Herstellen eines reinen Fischproduktes aus Fischfilets und/oder deren Teilen, ohne Bindemittel und dergleichen, dessen Eiweißmyomeren im wesentlichen unbeschädigt sind, dadurch gekennzeichnet, daß man frische und/oder aufgetaute Fischfilets und/oder -teile in einem Freifallmischer bei einer Temperatur im Bereich von ca. -4°C bis +10°C vereinzelt und ggf. Geschmacksstoffe mit Wasser zumischt, un daß anschließend die Fischfilets und/oder deren Teile auf ca. -4°C (±4°C) zurückgekühlt werden, während sie einen mit Stickstoff beschickten Frosttunnel durchlaufen, und daß die Fischfilets und/oder deren Teile dann über einen Förderer in eine ebenfalls auf eine Temperatur von ca. -4°C (±4°C) abgekühlte Formkammer überführt werden, wo sie mit einem Druck von 5 - 15 kp/cm², insbesondere 10 kp/cm² in eine Formplatte gepreßt werden.

2. Verfahren nach Anspruch 1, dadurch gekennzeichnet, daß Formkammer der Ausformmaschine durch das Befüllen mit kalten Fischfilets nach ca. 5 - 30 Minuten Produktionszeit auf die gewünschte Arbeitstemperatur von ca. -4°C (±4°C) herabgekühlt sein muß.

3. Verfahren nach Anspruch 1, dadurch gekennzeichnet, daß man Salz und/oder Zitronensäure und dergleichen als Geschmacksstoffe auf die aufgetauten oder frischen Fischfilets und/oder deren Teile aufbringt.

4. Verfahren nach Anspruch 1, dadurch gekennzeichnet, daß 0 - 10 Gew% Wasser in Bezug zur Fischmenge, insbesondere 1 - 2 Gew% Wasser, zugesetzt werden.

5. Verfahren nach Anspruch 1, dadurch gekennzeichnet, daß die Fischfilets und/oder deren Teile anschließend an ihrer Oberfläche ein- oder mehrmals wieder angefroren werden.

6. Verfahren nach Anspruch 1, dadurch gekennzeichnet, daß die Fischfilets und/oder deren Teile in der Formkammer unter Druck gesetzt werden, und daß die Metalloberfläche bereift oder vereist ist.

7. Verfahren nach einem oder mehreren der vorstehenden Ansprüche 1 bis 6, dadurch gekennzeichnet, daß die geformten Fisch-Portionen in üblichen, nachgeschalteten Vorrichtungen mit Paniermasse und/oder Backteig umhüllt werden.

8. Verfahren nach den Ansprüchen 6 und 7, dadurch gekennzeichnet, daß die Fisch-Portionen in einem Schockfroster gefroren und anschließend verpackt werden.

## EUROPÄISCHER RECHERCHENBERICHT

Europäisches Patentamt

Nummer der Anmeldung

EP 89 10 0646

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A- 781 620 (NORSK FROSSENFISK A/L) <br> * Seite 1, Zeilen 39-89; Seite 2, Zeilen 2-28,36-42,95-106; Seite 4, Zeilen 63-84; Seite 5, Zeilen 7-11 * <br> --- | 1,3,5-8 | A 23 B 4/06 <br> A 23 B 4/08 |
| Y | GB-A-1 214 667 (EILER SCHJOLBERG) <br> * Seite 1, Zeilen 8-13; Seite 2, Zeilen 6-53,78-130; Seite 3, Zeilen 1-21 * <br> --- | 1,3,5-8 | |
| Y | GB-A-2 170 392 (SUFFOLK SOVEREIGN CHICKEN LTD) <br> * Seite 1, Zeilen 34-74,83-94,97-130; Seite 2, Zeilen 1-69 * <br> --- | 1,3,5-8 | |
| A | US-A-2 643 952 (H.E. CROWTHER) <br> * Spalte 2, Zeilen 47-63; Spalte 3, Zeilen 1-58 * <br> --- | 1,3,4,8 | |
| A | DE-A-2 256 078 (TOBY ENTERPRISES) <br> * Seite 2, Zeile 25 - Seite 3, Zeile 24; Seite 7, Zeile 5 - Seite 8, Zeile 5; Ansprüche 1,7 * <br> --- | 1,2,6 | |
| A | DE-B-1 269 463 (O. MAYER-KARTRIDG PAK) <br> --- | | **RECHERCHIERTE SACHGEBIETE (Int. Cl.4)** <br> A 23 B <br> A 23 L |
| A | LU-A- 59 441 (NORDSEE GmbH) <br> --- | | |
| A | US-A-2 916 986 (M. LEBOVITZ) <br> ----- | | |

Der vorliegende Recherchenbericht wurde für alle Patentansprüche erstellt

| Recherchenort | Abschlußdatum der Recherche | Prüfer |
|---|---|---|
| DEN HAAG | 17-05-1989 | LEPRETRE F.G.M.J. |

EPO FORM 1503 03.82 (P0403)